# EUROPÄISCHE PATENTSCHRIFT

(11) **EP 2 397 827 B1**
(45) Veröffentlichungstag und Bekanntmachung des Hinweises auf die Patenterteilung: **23.05.2012**
(21) Anmeldenummer: 11168517.8
(22) Anmeldetag: 01.06.2011
(51) Int. Cl.: G01K 11/32

(54) **Verfahren und Vorrichtung zur ortsaufgelösten Messung einer physikalischen Größe**
Method and device for spatially resolved measurement of a physical value
Procédé et dispositif de mesure à résolution spatiale d'une grandeur physique

(30) Priorität: 17.06.2010 DE 102010024178
(43) Veröffentlichungstag der Anmeldung: 21.12.2011
(73) Patentinhaber: LIOS Technology GmbH, 51063 Köln (DE)
(72) Erfinder: Hill, Wieland, 51519 Odenthal (DE); Fromme, Martin, 51069 Köln (DE); Kübler, Jochen, 51061 Köln (DE); Roda, Ingo, 51067 Köln (DE)
(74) Vertreter: Basfeld, Rainer

(56) Entgegenhaltungen:
- WO-A1-2006/027369

## Beschreibung

Die vorliegende Erfindung betrifft ein Verfahren zur ortsaufgelösten Messung einer physikalischen Größe gemäß dem Oberbegriff des Anspruchs 1 sowie eine Vorrichtung zur ortsaufgelösten Messung einer physikalischen Größe gemäß dem Oberbegriff des Anspruchs 8.

Definitionen: Optische Frequenzbereichsreflektometrie, auch bekannt unter der englischen Bezeichnung Optical Frequency Domain Reflectometry (OFDR), wird im Folgenden als OFDR-Verfahren bezeichnet. Vorrichtungen oder integrierte Schaltungen oder Systeme, die zur Durchführung einer direkten digitalen Synthese (DDS) geeignet sind, werden im Folgenden DDS-Systeme genannt. Wenn im Folgenden die Begriffe Licht, optische Strahlung oder optisches Signal verwendet werden, ist damit elektromagnetische Strahlung im optischen Spektralbereich, insbesondere vom XUV bis zum FIR, gemeint.

Bei der verteilten Temperaturmessung in Glasfasern (Distributed Temperature Sensing - DTS) mittels eines OFDR-Verfahrens und bei zahlreichen anderen Anwendungen besteht die Aufgabe, die Amplitude und Phase optischer bezeihungswese elektrischer Signale schnell und rauscharm zu messen. Dies ist für die Zeit- und Temperaturauflösung der verteilten Temperaturmessung entscheidend.

Aus "System description FibroLaser II", Siemens Cerberus Division W458e, Version 1.2e aus dem Januar 1999 sind ein Verfahren und eine Vorrichtung der eingangs genannten Art bekannt. Die darin beschriebene Vorrichtung umfasst einen Frequenzgenerator für die Erzeugung einer Signalfrequenz und einer lokalen Oszillatorfrequenz, die sich um eine feste Differenzfrequenz von der Signalfrequenz unterscheidet. Die optische Strahlung eines Lasers wird mit der Signalfrequenz frequenzmoduliert und in eine Lichtleitfaser eingekoppelt. Die aufgrund von Raman-Effekten rückgestreuten Anteile dieser optischen Strahlung werden aus der Faser ausgekoppelt und von Photomultipliern in elektrische Signale umgewandelt. Diese werden mit der lokalen Oszillatorfrequenz gemischt und analog gefiltert. Anschließend werden sie digitalisiert und in den Ortsbereich fouriertransformiert. Die so erhaltenen Rückstreuprofile der aufgrund des Raman-Effektes hervorgerufenen Signale bilden die Basis der Temperaturberechnung.

Ein weiteres Beispiel ist in WO 2006/027369 A1 zu finden.

Ein derartiges Messsystem stellt einen sogenannten Heterodyn-Empfänger dar, bei dem eine Signalfrequenz mit einer lokalen Oszillatorfrequenz gemischt wird, um eine feste Differenzfrequenz zu erhalten. Diese kann schmalbandig verstärkt und gefiltert werden. Bei analogen Systemen sind der Filterung jedoch Grenzen gesetzt durch Bauteiltoleranzen und -drift. Außerdem benötigen schmalbandige Filter längere Einschwingzeiten, in denen Amplituden und Phasen durch den Filter beeinflusst werden.

Das der vorliegenden Erfindung zugrunde liegende Problem ist die Schaffung eines Verfahrens und einer Vorrichtung der eingangs genannten Art, die eine schnellere und/oder rauschärmere Messung der physikalischen Größe ermöglichen.

Dies wird erfindungsgemäß hinsichtlich des Verfahrens durch ein Verfahren der eingangs genannten Art mit den kennzeichnenden Merkmalen des Anspruchs 1 sowie hinsichtlich der Vorrichtung durch eine Vorrichtung der eingangs genannten Art mit den kennzeichnenden Merkmalen des Anspruchs 8 erreicht. Die abhängigen Ansprüche betreffen bevorzugte Ausgestaltungen der Erfindung.

Gemäß Anspruch 1 ist vorgesehen, dass ein drittes elektrisches Signal mit einer dritten Frequenz erzeugt wird, wobei die dritte Frequenz der Differenzfrequenz oder einem Vielfachen der Differenzfrequenz entspricht, und dass zur Digitalisierung das gemischte Signal mit der dritten Frequenz abgetastet wird. Gemäß Anspruch 8 ist entsprechend vorgesehen, dass die Vorrichtung weiterhin Mittel zur Erzeugung eines dritten elektrischen Signals mit einer dritten Frequenz umfasst, wobei die dritte Frequenz der Differenzfrequenz oder einem Vielfachen der Differenzfrequenz entspricht, und wobei der DA-Wandler das mindestens eine gemischte Signal mit der dritten Frequenz abtasten kann, um es zu digitalisieren. Auf diese Weise kann ein digitaler anstelle eines analogen Filters verwendet werden, so dass eine bessere Rauschunterdrückung und/oder eine schnellere Messung von Amplitude und Phase der optischen Signale möglich wird.

Es kann vorgesehen sein, dass das erste und/oder das zweite und/oder das dritte elektrische Signal vermittels direkter digitaler Synthese erzeugt werden. Entsprechend kann vorgesehen sein, dass die Mittel zur Erzeugung des ersten elektrischen Signals ein erstes DDS-System und/oder dass die Mittel zur Erzeugung des zweiten elektrischen Signals ein zweites DDS-System und/oder dass die Mittel zur Erzeugung des dritten elektrischen Signals ein drittes DDS-System sind. Durch die Verwendung von DDS-Systemen für die Erzeugung der drei elektrischen Signale erfolgt ein Übergang zur digitalen Technik.

Vorzugsweise kann dabei für die direkte digitale Synthese des ersten und/oder des zweiten und/oder des dritten elektrischen Signals ein Taktsignal genutzt wird, wobei insbesondere für die direkte digitale Synthese des ersten und des zweiten und des dritten elektrischen Signals dasselbe Taktsignal genutzt wird. Entsprechend kann vorgesehen sein, dass die Vorrichtung weiterhin einen Taktgeber umfasst, der das erste DDS-System und/oder das zweite DDS-System und/oder das dritte DDS-System mit einem Taktsignal beaufschlagen kann. Die Kopplung aller drei DDS-Systeme an das gleiche Taktsignal führt zu einer, im Rahmen der DDS-Auflösung von beispielsweise 0,12Hz, präzisen digitalen Abtastung des zu digitalisierenden Signals. Vorteilhaft ist dabei eine Frequenzberechnung anhand digitaler Worte, so dass keine Rundungsfehler durch Umrechnung auf reelle Zahlen auftreten. Eine Drift des Taktsignals wirkt sich auf alle drei DDS-Systeme gleich aus, so dass stets die exakte Abtastfrequenz erreicht wird.

Durch dieses Konzept der Frequenzerzeugung und -abtastung wird der Einsatz einer neuen, digitalen Filtertechnik möglich.

Der Digitalfilter benötigt keine Einschwingzeit. Auf schmalbandige analoge Filter kann in dem Aufbau verzichtet werden. Durch die präzise Abtastung lassen sich höhere Differenzfrequenzen mit schmalbandigerer Detektion als mit analoger Technik realisieren.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Ansicht einer ersten Ausführungsform einer erfindungsgemäßen Vorrichtung;
- Fig. 2: eine schematische Ansicht einer zweiten Ausführungsform einer erfindungsgemäßen Vorrichtung;
- Fig. 3: eine schematische Ansicht einer dritten Ausführungsform einer erfindungsgemäßen Vorrichtung;
- Fig. 4: eine schematische Ansicht einer vierten Ausführungsform einer erfindungsgemäßen Vorrichtung.

In den Figuren sind gleiche oder funktional gleiche Signale, Elemente oder Einheiten mit gleichen Bezugszeichen versehen.

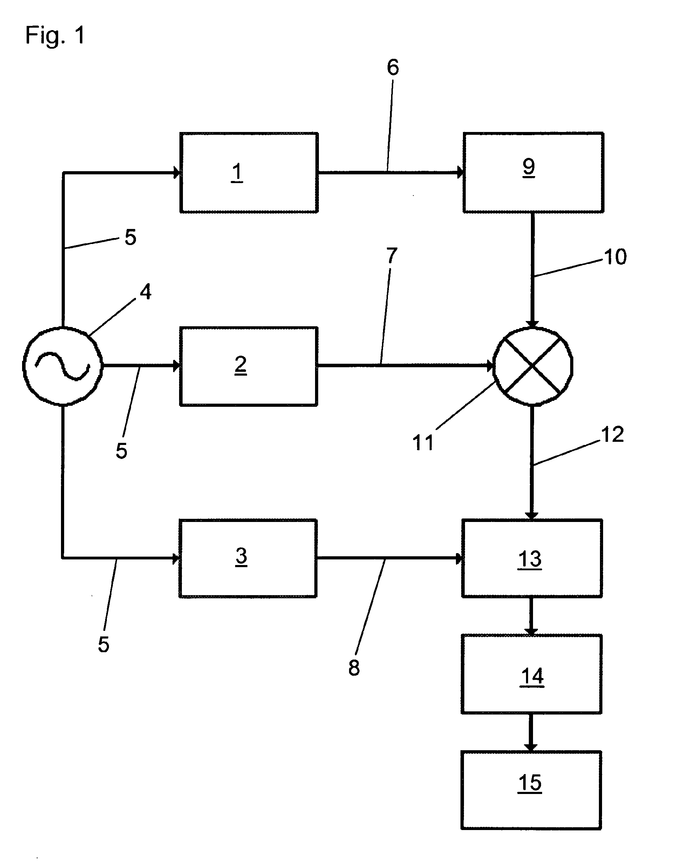

Die in Fig. 1 abgebildete erste Ausführungsform umfasst als Mittel zur Erzeugung elektrischer Signale ein erstes DDS-System 1, ein zweites DDS-System 2 und ein drittes DDS-System 3. Die Vorrichtung umfasst weiterhin einen Taktgeber 4, der ein Taktsignal (CLK) 5 ausgibt. Die drei DDS-Systeme 1, 2, 3 nutzen jeweils das gleiche Taktsignal 5.

Das erste DDS-System 1 erzeugt ein erstes zeitlich veränderliches elektrisches Signal 6, das eine erste zeitlich veränderliche Frequenz f_{RF}(t) aufweist. Das zweite DDS-System 2 erzeugt ein zweites zeitlich veränderliches elektrisches Signal 7, das eine zweite zeitlich veränderliche Frequenz f_{LO}(t) aufweist. Die zweite Frequenz f_{LO}(t) unterscheidet sich von der ersten Frequenz f_{RF}(t) durch eine feste, zeitlich nicht veränderliche Differenzfrequenz f_{ZF}.

Das dritte DDS-System 3 erzeugt ein drittes zeitlich veränderliches elektrisches Signal 8, das eine dritte zeitlich veränderliche Frequenz aufweist, die dem Produkt aus der Differenzfrequenz f_{ZF} und einem Faktor 2^{N} entspricht. Dabei kann N=0, 1, 2, ... sein. Bevorzugte Werte für N sind beispielsweise 2, 3, 4 oder 5, so dass die dritte Frequenz gleich dem vierfachen, dem achtfachen, dem sechzehnfachen oder dem zweiunddreißigfachen der Differenzfrequenz f_{ZF} ist.

Vorteilhafterweise wird dabei die Berechnung der drei Frequenzen f_{RF}(t), f_{LO}(t) und f_{ZF} anhand digitaler Worte durchgeführt, so dass keine Rundungsfehler durch Umrechnung auf reelle Zahlen auftreten. Eine Drift des Taktsignals 5 wirkt sich auf alle drei DDS-Systeme 1, 2, 3 gleichartig aus, das heißt, dass die relativen Frequenzänderungen gleich sind.

Mit dem Bezugszeichen 9 ist ein lediglich schematisch dargestellter Teil eines Messgeräts bezeichnet, das neben einer optischen Strahlungsquelle zur Erzeugung eines optischen Signals ein Messobjekt wie beispielsweise eine Lichtleitfaser und einen Photodetektor umfasst. Das optische Signal wird mit dem ersten Signal 6 amplituden- oder frequenzmoduliert. Die Modulation kann dabei beispielsweise durch eine entsprechende Ansteuerung der beispielsweise als Laser ausgebildeten optischen Strahlungsquelle erreicht werden. Alternativ kann auch das aus der optischen Strahlungsquelle austretende optische Signal von einem optischen Modulator moduliert werden.

Das modulierte optische Signal kann in das Messobjekt eingekoppelt und nach Wechselwirkung mit dem Messobjekt aus diesem ausgekoppelt werden. Entsprechende Mittel zur Ermöglichung der Wechselwirkung können beispielsweise Einkoppler, Auskoppler, Strahlteiler und Filter umfassen. Daran anschließend kann das aufgrund der Wechselwirkung modifizierte optische Signal im Photodetektor in mindestens ein elektrisches Signal 10 gewandelt werden. Die dafür verwendeten Wandlermittel können dabei beispielsweise als Photomultiplier, Photodiode oder andere Sensormittel ausgebildet sein.

Das aus dem Messgerät 9 austretende elektrische Signal 10 wird in einem Mischer 11 mit dem zweiten Signal 7 gemischt. Das gemischte Signal 12 weist dabei exakt die der Differenzfrequenz f_{ZF} auf, wobei die durch die Wechselwirkung mit dem Messobjekt verursachte Messinformation in der Amplitude und der Phase des gemischten Signals 12 enthalten ist.

Das gemischte Signal 12 wird in einem AD-Wandler 13 digitalisiert. Dabei wird das gemischte Signal 12 mit der dritten Frequenz des dritten elektrischen Signals 8 abgetastet. Aufgrund des an jedem der drei DDS-Systeme 1, 2, 3 anliegenden gleichen Taktsignals 5 wird stets exakt die gewünschte Abtastfrequenz erreicht.

Das digitalisierte Signal kann mit einem digitalen Filter 14 gefiltert werden. In sich daran anschließenden Auswertemitteln 15 können die gefilterten Daten ausgewertet werden, so dass die ortsaufgelösten Messdaten der zu erfassenden physikalischen Größe bestimmt werden können.

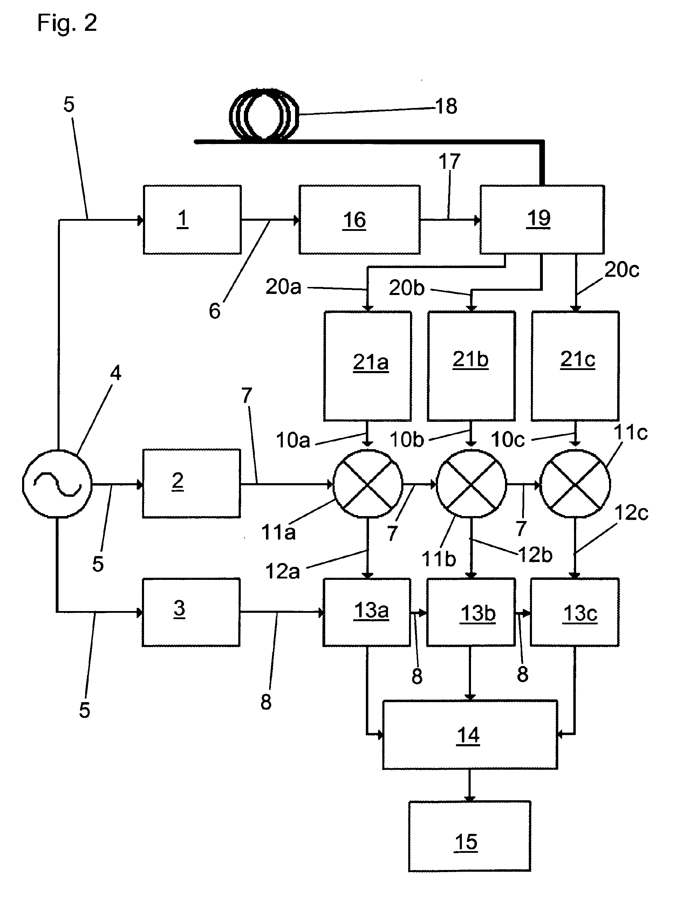

Bei der zweiten Ausführungsform einer erfindungsgemäßen Vorrichtung gemäß Fig. 2 wird explizit eine verteilte Temperaturmessung in Lichtleitfasern (DTS) mittels eines OFDR-Verfahrens durchgeführt.

In Fig. 2 ist insbesondere das Messgerät detaillierter dargestellt. Dieses umfasst einen Laser 16, der mit der ersten Frequenz f_{RF}(t) des ersten elektrischen Signals 6 frequenz- oder amplitudenmoduliert wird. Die Modulation kann dabei beispielsweise durch eine entsprechende Ansteuerung des Lasers 16 erreicht werden. Alternativ kann auch das aus dem Laser 16 austretende optische Signal 17 von einem optischen Modulator moduliert werden.

Es besteht durchaus die Möglichkeit, anstelle des Lasers 16 eine andere optische Strahlungsquelle wie beispielsweise eine Superlumineszenzdiode zu verwenden.

Als Messobjekt dient eine optische Faser 18, in der insbesondere die Temperatur ortsaufgelöst erfasst werden soll. Mit dem Bezugszeichen 19 sind Mittel zur Ermöglichung der Wechselwirkung mit der optischen Faser 18 bezeichnet. Diese Mittel 19 können beispielsweise Einkoppler, Auskoppler, Strahlteiler und Filter umfassen.

Die Mittel 19 weisen drei Ausgänge für optische Signale 20a, 20b, 20c auf. Es besteht durchaus die Möglichkeit mehr als drei Ausgänge vorzusehen, wobei ein vierter Ausgang beispielsweise für den Rayleigh-Anteil der zurückgestreuten Strahlung verwendet werden kann. Das erste optische Signal 20a entspricht dem aus dem Laser 16 austretenden primären optischen Signal 17 und kann von diesem beispielsweise durch einen Strahlteiler abgezweigt werden.

Das zweite optische Signal 20b ist durch eine Raman-Wechselwirkung mit der optischen Faser hinsichtlich der optischen Wellenlänge modifiziert und entspricht dem Stokes-Anteil der zurückgestreuten Strahlung. Zur Abzweigung dieses Stokes-Anteils können die Mittel 19 einen entsprechenden Filter aufweisen.

Das dritte optische Signal 20c ist ebenfalls durch eine Raman-Wechselwirkung mit der optischen Faser hinsichtlich der optischen Wellenlänge modifiziert und entspricht dem Anti-Stokes-Anteil der zurückgestreuten Strahlung. Zur Abzweigung dieses Anti-Stokes-Anteils können die Mittel 19 ebenfalls einen entsprechenden Filter aufweisen.

Die optischen Signale 20a, 20b, 20c werden in geeigneten Wandlermittein 21a, 21 b, 21c in elektrische Signale 10a, 10b, 10c umgewandelt. Die Wandlermittel 21 a, 21 b, 21 c können dazu beispielsweise Photomultiplier, Photodioden, Avalanche-Photodioden oder andere geeignete Sensormittel und gegebenenfalls elektrische Verstärker umfassen.

Die aus den Wandlermitteln 21 a, 21 b, 21 c austretenden elektrischen Signale 10a, 10b, 10c werden jeweils in einem Mischer 11a, 11b, 11c mit dem zweiten Signal 7 gemischt. Das durch die Mischung entstehende gemischte Signal 12a weist dabei eine Frequenz auf, die der Differenzfrequenz f_{ZF} entspricht. Die durch die Mischung entstehenden gemischten Signal 12b, 12c weisen dabei exakt die Differenzfrequenz f_{ZF} auf, und enthält die Information, die durch die Raman-Wechselwirkung mit dem Messobjekt hervorgerufen wird, in der Signalamplitude und -Phase.

Die gemischten Signale 12a, 12b, 12c werden jeweils in einem AD-Wandler 13a, 13b, 13c digitalisiert. Dabei wird jedes der gemischten Signal 12a, 12b, 12c mit der dritten Frequenz des dritten elektrischen Signals 8 abgetastet. Aufgrund des an jedem der drei DDS-Systeme 1, 2, 3 anliegenden gleichen Taktsignals 5 wird stets exakt die gewünschte Abtastfrequenz erreicht.

Eine Filterung erfolgt in einem gemeinsamen nachgeschalteten digitalen Filter 14, der dem digitalen Filter 14 der ersten Ausführungsform entsprechen kann. In sich daran anschließenden Auswertemitteln 15 können die gefilterten Daten ausgewertet und insbesondere fouriertransformiert werden, so dass die ortsaufgelösten Messdaten der zu erfassenden physikalischen Größe bestimmt werden können.

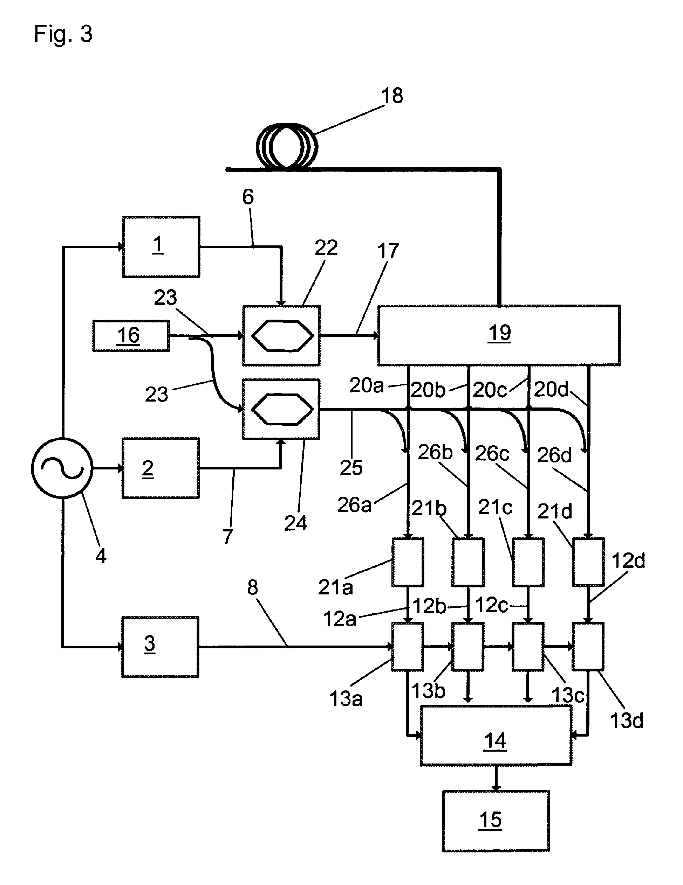

Die dritte Ausführungsform gemäß Fig. 3 unterscheidet sich von derjenigen gemäß Fig. 2 im Wesentlichen dadurch, dass der Laser 16 nicht direkt mit der ersten Frequenz f_{RF}(t) des ersten elektrischen Signals 6 moduliert wird, sondern dass ein erster optischer Modulator 22 zur Modulation der aus dem Laser 16 austretenden optischen Strahlung 23 verwendet wird. Das aus dem ersten optischen Modulator 22 austretende optische Signal 17 wird über die Mittel 19 in die optische Faser 18 eingekoppelt.

Zusätzlich zu den drei bereits unter Bezugnahme auf die Fig. 2 beschriebenen, aus den Mitteln 19 austretenden optischen Signalen 20a, 20b, 20c tritt bei der dritten Ausführungsform noch ein weiteres optisches Signal 20d aus den Mitteln 19 aus. Bei diesem kann sich beispielsweise um den zurückgestreuten Rayleigh-Anteil der optischen Strahlung handeln.

Es besteht durchaus die Möglichkeit, auch bei der dritten Ausführungsform nur drei austretende optische Signale 20a, 20b, 20c vorzusehen. Weiterhin kann auch bei der zweiten Ausführungsform vorgesehen sein, dass ein viertes austretendes Signal 20d mit erfasst wird.

Es ist weiterhin ein zweiter optischer Modulator 24 vorgesehen, in dem ein Teil der optischen Strahlung 23 des Lasers 16 mit der zweiten Frequenz f_{LO}(t) moduliert wird. Das aus dem zweiten optischen Modulator 24 austretende optische Signal 25 wird optisch mit den optischen Signalen 20a, 20b, 20c, 20d gemischt beziehungsweise in diese eingekoppelt.

Diese gemischten optischen Signale 26a, 26b, 26c, 26d werden in geeigneten Wandlermitteln 21a, 21b, 21c, 21d in elektrische Signale 12a, 12b, 12c, 12d umgewandelt. Wie bei dem zweiten Ausführungsbeispiel weist das Signal 12a dabei eine Frequenz auf, die der Differenzfrequenz f_{ZF} entspricht. Weiterhin weisen dabei die Signale 12b, 12c, 12d exakt die Differenzfrequenz f_{ZF} auf, und enthalten die Information, die durch die Raman-Wechselwirkung mit dem Messobjekt hervorgerufen wird, in der Signalamplitude und - Phase.

Ebenfalls wie bei der zweiten Ausführungsform werden die gemischten Signale 12a, 12b, 12c, 12d jeweils in einem AD-Wandler 13a, 13b, 13c, 13d digitalisiert. Dabei wird jedes der gemischten Signal 12a, 12b, 12c, 12d mit der dritten Frequenz des dritten elektrischen Signals 8 abgetastet. Aufgrund des an jedem der drei DDS-Systeme 1, 2, 3 anliegenden gleichen Taktsignals 5 wird stets exakt die gewünschte Abtastfrequenz erreicht.

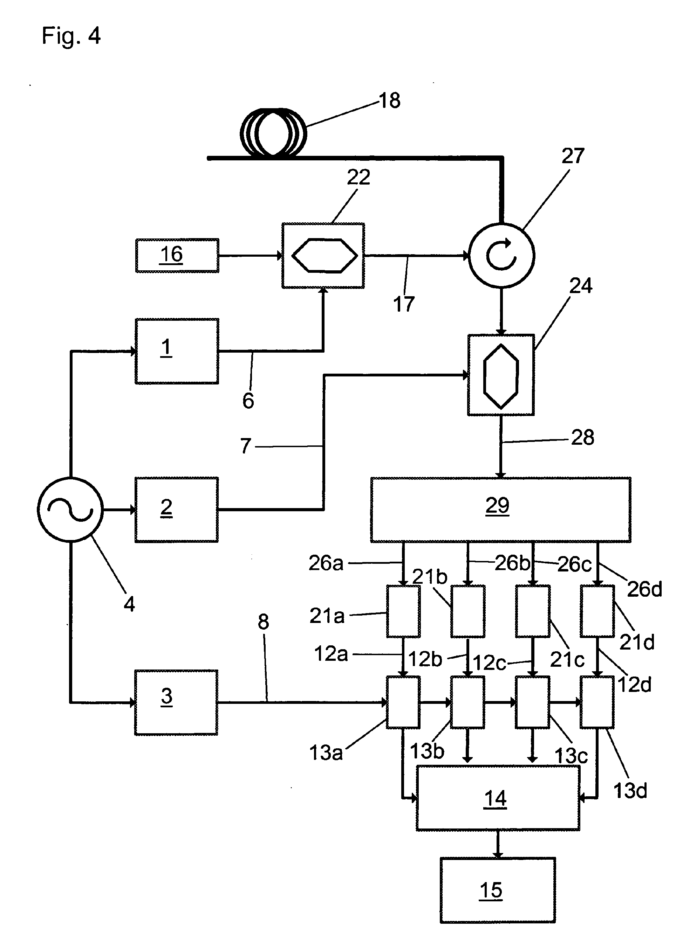

Die vierte Ausführungsform (Fig. 4) unterscheidet sich nur unwesentlich von der dritten Ausführungsform (Fig. 3). Das aus dem ersten optischen Modulator 22 austretende optische Signal 17 wird über einen Zirkulator 27 in die optische Faser 18 eingekoppelt. Das aus der Faser 18 austretende Signal gelangt über den Zirkulator in den zweiten optischen Modulator 24. Dort erfolgt eine zusätzliche Modulation mit der zweiten Frequenz f_{LO}(t), so dass das aus dem zweiten optischen Modulator 24 austretende optische Signal 28 mit der Differenzfrequenz f_{ZF} moduliert ist.

Dieses Signal 28 tritt in Mittel 29 zur Strahlteilung und Filterung ein, in denen das Signal gefiltert und dabei in die einzelnen Kanäle aufgespalten wird, so dass aus den Mitteln 29 die optischen Signale 26a, 26b, 26c, 26d austreten. Diese werden wie bei dem zweiten und dem dritten Beispiel beschrieben weiterverarbeitet.

Es besteht durchaus die Möglichkeit, auch bei dieser Ausführungsform nur drei austretende optische Signale 26a, 26b, 26c vorzusehen. Weiterhin können auch bei der zweiten und der dritten Ausführungsform entsprechende Bauteile, wie beispielsweise der Zirkulator 27 verwendet werden.

## Patentansprüche

1. Verfahren zur ortsaufgelösten Messung einer physikalischen Größe, umfassend folgenden Verfahrensschritte:
- Es wird ein erstes elektrisches Signal (6) mit einer ersten zeitlich veränderlichen Frequenz (f_{RF}(t)) erzeugt,
- es wird ein zweites elektrisches Signal (7) mit einer zweiten, zeitlich veränderlichen Frequenz (f_{LO}(t)) erzeugt, die sich von der ersten Frequenz (f_{RF}(t)) um eine Differenzfrequenz (f_{ZF}) unterscheidet,
- es wird ein optisches Signal (17) erzeugt und mit der ersten Frequenz (f_{RF}(t)) moduliert,
- das optische Signal (17) wird durch Wechselwirkung mit einem Messobjekt modifiziert, wobei die Modifizierung Informationen über die ortsaufgelöst zu messende physikalischen Größe beinhaltet,
- das modifizierte optische Signal (20a, 20b, 20c, 20d) wird in mindestens ein elektrisches Signal (10, 10a, 10b, 10c) gewandelt, wobei entweder
- das modifizierte optische Signal (20a, 20b, 20c, 20d) vor der Wandlung mit der zweiten Frequenz (f_{LO}(t)) moduliert wird, oder
- das modifizierte optische Signal (20a, 20b, 20c, 20d) vor der Wandlung mit einem mit der zweiten Frequenz (f_{LO}(t)) modulierten Signal (25) gemischt wird, oder
- das mindestens eine elektrisches Signal (10, 10a, 10b, 10c) mit dem zweiten Signal (7) gemischt wird,
- das gemischte Signal (12, 12a, 12b, 12c, 12d) wird digitalisiert,
- aus den digitalisierten Daten wird die zu messende physikalische Größe ortsaufgelöst bestimmt,
**dadurch gekennzeichnet, dass**
- ein drittes elektrisches Signal (8) mit einer dritten Frequenz erzeugt wird, wobei die dritte Frequenz der Differenzfrequenz (f_{ZF}) oder einem Vielfachen der Differenzfrequenz (f_{ZF}) entspricht, und dass
- zur Digitalisierung das gemischte Signal (12, 12a, 12b, 12c, 12d) mit der dritten Frequenz abgetastet wird.

2. Verfahren nach Anspruch 1, **dadurch gekennzeichnet, dass** die dritte Frequenz einem Produkt aus der Differenzfrequenz (f_{ZF}) und einem Faktor 2^{N} entspricht, wobei N=0, 1, 2, ... ist.

3. Verfahren nach einem der Ansprüche 1 oder 2, **dadurch gekennzeichnet, dass** das erste und/oder das zweite und/oder das dritte elektrische Signal (6, 7, 8) vermittels direkter digitaler Synthese erzeugt werden.

4. Verfahren nach Anspruch 3, **dadurch gekennzeichnet, dass** für die direkte digitale Synthese des ersten und/oder des zweiten und/oder des dritten elektrischen Signals (6, 7, 8) ein Taktsignal (5) genutzt wird, wobei insbesondere für die direkte digitale Synthese des ersten und des zweiten und des dritten elektrischen Signals (6, 7, 8) dasselbe Taktsignal (5) genutzt wird.

5. Verfahren nach einem der Ansprüche 1 bis 4, **dadurch gekennzeichnet, dass** die dritte Frequenz einem Vielfachen der Differenzfrequenz (f_{ZF}) entspricht.

6. Verfahren nach einem der Ansprüche 1 bis 5, **dadurch gekennzeichnet, dass** das Verfahren ein Frequenzbereichsverfahren, insbesondere ein OFDR-Verfahren ist.

7. Vorrichtung zur ortsaufgelösten Messung einer physikalischen Größe, insbesondere geeignet zur Durchführung eines Verfahrens nach einem der Ansprüche 1 bis 6, umfassend
- Mittel zur Erzeugung eines ersten elektrischen Signals (6) mit einer ersten zeitlich veränderlichen Frequenz (f_{RF}(t)),
- Mittel zur Erzeugung eines zweiten elektrischen Signals (7) mit einer zweiten, zeitlich veränderlichen Frequenz (f_{LO}(t)), die sich von der ersten Frequenz (f_{RF}(t)) um eine Differenzfrequenz (f_{ZF}) unterscheidet,
- eine optische Strahlungsquelle, insbesondere ein Laser (16), zur Erzeugung eines optischen Signals (17), die derart angesteuert werden kann oder deren Ausgangssignal derart moduliert werden kann, dass ein mit der ersten Frequenz (f_{RF}(t)) moduliertes optisches Signal (17) erzeugt werden kann,
- Mittel (19) zur Ermöglichung einer Wechselwirkung des optischen Signals (17) mit einem Messobjekt, wobei das optische Signal (17) durch die Wechselwirkung mit Informationen über die ortsaufgelöst zu messende physikalischen Größe modifiziert werden kann,
- Wandlermittel (21 a, 21 b, 21 c, 21 d), die das modifizierte optische Signal (20a, 20b, 20c, 20d) in mindestens ein elektrisches Signal (10, 10a, 10b, 10c) wandeln können,
- Misch- und/oder Moduliermittel, die entweder
- das modifizierte optische Signal (20a, 20b, 20c, 20d) vor der Wandlung mit der zweiten Frequenz (f_{LO}(t)) modulieren können, oder
- das modifizierte optische Signal (20a, 20b, 20c, 20d) vor der Wandlung mit einem mit der zweiten Frequenz (f_{LO}(t)) modulierten Signal (25) mischen können, oder
- das mindestens eine aus der Wandlung hervorgegangene elektrische Signal (10, 10a, 10b, 10c) mit dem zweiten Signal (7) mischen können,
- einen DA-Wandler (13, 13a, 13b, 13c) zur Digitalisierung des mindestens einen gemischten Signals (12, 12a, 12b, 12c, 12d),
- Auswertemittel (15) zur ortsaufgelösten Bestimmung der zu messenden physikalischen Größe aus den digitalisierten Daten,
**dadurch gekennzeichnet, dass** die Vorrichtung weiterhin Mittel zur Erzeugung eines dritten elektrischen Signals (8) mit einer dritten Frequenz umfasst, wobei die dritte Frequenz der Differenzfrequenz (f_{ZF}) oder einem Vielfachen der Differenzfrequenz (f_{ZF}) entspricht, und wobei der DA-Wandler (13, 13a, 13b, 13c) das mindestens eine gemischte Signal (12, 12a, 12b, 12c) mit der dritten Frequenz abtasten kann, um es zu digitalisieren.

8. Vorrichtung nach Anspruch 7, **dadurch gekennzeichnet, dass** die Mittel zur Erzeugung des ersten elektrischen Signals (6) ein erstes DDS-System (1) und/oder dass die Mittel zur Erzeugung des zweiten elektrischen Signals (7) ein zweites DDS-System (2) und/oder dass die Mittel zur Erzeugung des dritten elektrischen Signals (8) ein drittes DDS-System (3) sind.

9. Vorrichtung nach Anspruch 8, **dadurch gekennzeichnet, dass** die Vorrichtung weiterhin einen Taktgeber (4) umfasst, der das erste DDS-System (1) und/oder das zweite DDS-System (2) und/oder das dritte DDS-System (3) mit einem Taktsignal (5) beaufschlagen kann.

10. Vorrichtung nach einem der Ansprüche 7 bis 9, **dadurch gekennzeichnet, dass** das Messobjekt eine optische Faser (18) ist, die vorzugsweise von der Vorrichtung umfasst ist, wobei insbesondere die ortsaufgelöst zu messende physikalische Größe die lokale Temperatur der optischen Faser (18) ist.

## Claims

1. Method for spatially resolved measuring of a physical variable, comprising the following method steps:
- a first electrical signal (6) with first time-varying frequency (f_{RF}(t)) is generated,
- a second electrical signal (7) with a second time-varying frequency (f_{LO}(t)) is generated, which differs from the first frequency (f_{RF}(t)) by a difference frequency (f_{ZF}),
- an optical signal (17) is generated and modulated by the first frequency (f_{RF}(t)),
- the optical signal (17) is modified by an interaction with a test object, wherein the modification contains information relating the physical variable to be measured in a spatially resolved fashion,
- the modified optical signal (20a, 20b, 20c, 20d) is converted into at least one electrical signal (10, 10a, 10b, 10c), wherein either
- the modified optical signal (20a, 20b, 20c, 20d) is modulated by the second frequency (f_{LO}(t)) before the conversion, or
- the modified optical signal (20a, 20b, 20c, 20d) is mixed with a signal (25) modulated by the second frequency (f_{LO}(t)) before the conversion, or
- the at least one electrical signal (10, 10a, 10b, 10c) is mixed with the second signal (7),
- the mixed signal (12, 12a, 12b, 12c, 12d) is digitized,
- the physical variable to be measured is determined in a spatially resolved fashion from the digitized data,
**characterized in that**
- a third electrical signal (8) with a third frequency is generated, wherein the third frequency corresponds to the difference frequency (f_{ZF}) or a multiple of the difference frequency (f_{ZF}), and **in that**
- the mixed signal (12, 12a, 12b, 12c, 12d) is sampled at the third frequency for the purposes of digitizing.

2. Method according to Claim 1, **characterized in that** the third frequency corresponds to a product of the difference frequency (f_{ZF}) and a factor of 2^{N}, wherein N = 0, 1, 2, ....

3. Method according to one of Claims 1 or 2, **characterized in that** the first and/or the second and/or the third electrical signal (6, 7, 8) is generated by means of direct digital synthesis.

4. Method according to Claim 3, **characterized in that** a clock signal (5) is utilized for the direct digital synthesis of the first and/or the second and/or the third electrical signal (6, 7, 8), wherein more particularly the same clock signal (5) is utilized for the direct digital synthesis of the first and the second and the third electrical signal (6, 7, 8).

5. Method according to one of Claims 1 to 4, **characterized in that** the third frequency is a multiple of the difference frequency (f_{ZF}).

6. Method according to one of Claims 1 to 5, **characterized in that** the method is a frequency domain method, more particularly an OFDR method.

7. Device for spatially resolved measuring of a physical variable, more particularly suitable for carrying out a method according to one of Claims 1 to 6, comprising:
- means for generating a first electrical signal (6) with a first time-varying frequency (f_{RF}(t)),
- means for generating a second electrical signal (7) with a second, time-varying frequency (f_{LO}(t)), which differs from the first frequency (f_{RF}(t)) by a difference frequency (f_{ZF}),
- an optical radiation source, more particularly a laser (16), for generating an optical signal (17), that can be actuated, or the output signal thereof can be modulated, such that an optical signal (17) modulated by the first frequency (f_{RF}(t)) can be generated,
- means (19) for allowing an interaction between the optical signal (17) and a test object, wherein the optical signal (17) can be modified by the interaction with information relating to the physical variable to be measured in a spatially resolved fashion,
- transducer means (21a, 21b, 21c, 21d), which can convert the modified optical signal (20a, 20b, 20c, 20d) into at least one electrical signal (10, 10a, 10b, 10c),
- mixing and/or modulating means, which either
- are able to modulate the modified optical signal (20a, 20b, 20c, 20d) with the second frequency (f_{LO}(t)) before the conversion, or
- are able to mix the modified optical signal (20a, 20b, 20c, 20d) with a signal (25) modulated by the second frequency (f_{LO}(t)) before the conversion, or
- are able to mix the at least one electrical signal (10, 10a, 10b, 10c) emerging from the conversion with the second signal (7),
- a D/A converter (13, 13a, 13b, 13c) for digitizing the at least one mixed signal (12, 12a, 12b, 12c, 12d),
- evaluation means (15) for determining the physical variable to be measured in a spatially resolved fashion from the digitized data,
**characterized in that** the device furthermore comprises means for generating a third electrical signal (8) with a third frequency, wherein the third frequency corresponds to the difference frequency (f_{ZF}) or a multiple of the difference frequency (f_{ZF}), and wherein the D/A converter (13, 13a, 13b, 13c) can sample the at least one mixed signal (12, 12a, 12b, 12c) at the third frequency in order to digitize it.

8. Device according to Claim 7, **characterized in that** the means for generating the first electrical signal (6) are a first DDS system (1) and/or **in that** the means for generating the second electrical signal (7) are a second DDS system (2) and/or **in that** the means for generating the third electrical signal (8) are a third DDS system (3).

9. Device according to Claim 8, **characterized in that** the device furthermore comprises a clock generator (4), which can apply a clock signal (5) to the first DDS system (1) and/or the second DDS system (2) and/or the third DDS system (3).

10. Device according to one of Claims 7 to 9, **characterized in that** the test object is an optical fiber (18), which is preferably included in the device, wherein more particularly the physical variable to be measured in a spatially resolved fashion is the local temperature of the optical fiber (18).

## Revendications

1. Procédé de mesure à résolution spatiale d'une grandeur physique, comportant les étapes suivantes du procédé :
- on génère un premier signal électrique (6) à une première fréquence modifiable dans le temps (f_{RF}(t)),
- on génère un deuxième signal électrique (7) à une deuxième fréquence modifiable dans le temps (f_{LO}(t)), qui se distingue de la première fréquence (f_{RF}(t)) d'une différence de fréquence (f_{ZF}),
- on génère un signal optique (17) et on le module au moyen de la première fréquence (f_{RF}(t)),
- le signal optique (17) est modifié par interaction avec un objet à mesurer, la modification contenant des informations sur la grandeur physique à mesurer avec une résolution spatiale,
- le signal optique modifié (20a, 20b, 20c, 20d) est converti en au moins un signal électrique (10, 10a, 10b, 10c), ce qui entraine
- soit une modulation du signal optique modifié (20a, 20b, 20c, 20d) avant la conversion par la deuxième fréquence (f_{LO}(t)),
- soit un mélange du signal optique modifié (20a, 20b, 20c, 20d) avant la conversion avec un signal (25) modulé par la deuxième fréquence (f_{LO}(t)),
- soit un mélange d'au moins un signal électrique (10, 10a, 10b, 10c) avec le deuxième signal (7),
- le signal mélangé (12, 12a, 12b, 12c, 12d) est numérisé,
- la grandeur physique à mesurer avec une résolution spatiale est déterminée à partir des données numérisées,
**caractérisé en ce que**
- on génère un troisième signal électrique (8) à une troisième fréquence, la troisième fréquence correspondant à la différence de fréquence (f_{ZF}) ou à un multiple de la différence de fréquence (f_{ZF}), et **en ce que**
- on échantillonne le signal mélangé (12, 12a, 12b, 12c, 12d) à la troisième fréquence pour sa numérisation.

2. Procédé selon la revendication 1, **caractérisé en ce que** la troisième fréquence correspond à un produit de la différence de fréquence (f_{ZF}) avec un facteur 2^{N}, où N=0, 1, 2, ....

3. Procédé selon une des revendications 1 ou 2, **caractérisé en ce que** le premier et/ou le deuxième et/ou le troisième signal électrique (6, 7, 8) sont générés par synthèse numérique directe.

4. Procédé selon la revendication 3, **caractérisé en ce qu'**on utilise un signal d'horloge (5) pour la synthèse numérique directe du premier et/ou du deuxième et/ou du troisième signal électrique (6, 7, 8), le même signal d'horloge (5) étant notamment utilisé pour la synthèse numérique directe du premier et/ou du deuxième et/ou du troisième signal électrique (6, 7, 8).

5. Procédé selon une des revendications 1 à 4, **caractérisé en ce que** la troisième fréquence correspond à un multiple de la différence de fréquence (f_{ZF}).

6. Procédé selon une des revendications 1 à 5, **caractérisé en ce que** le procédé est un procédé du domaine fréquentiel, notamment un procédé OFDR.

7. Dispositif de mesure à résolution spatiale d'une grandeur physique, notamment apte à l'exécution d'un procédé selon une des revendications 1 à 6, comportant
- des moyens pour générer un premier signal électrique (6) à une première fréquence modifiable dans le temps (f_{RF}(t)),
- des moyens pour générer un deuxième signal électrique (7) à une deuxième fréquence modifiable dans le temps (f_{LO}(t)), qui se distingue de la première fréquence (f_{RF}(t)) d'une différence de fréquence (f_{ZF}),
- une source de rayonnement optique, notamment un laser (16), pour la génération d'un signal optique (17), qui peut être commandée ou dont le signal de sortie peut être modulé de manière à pouvoir générer un signal optique (17) modulé par la première fréquence (f_{RF}(t)),
- des moyens (19) pour permettre une interaction du signal optique (17) avec un objet à mesurer, le signal optique (17) pouvant être modifié par l'interaction avec des informations sur la grandeur physique à mesurer avec une résolution spatiale,
- des moyens de conversion (21a, 21b, 21c, 21d) pouvant convertir le signal optique modifié (20a, 20b, 20c, 20d) en au moins un signal électrique (10, 10a, 10b, 10c),
- des moyens de mélange et/ou de modulation, pouvant
- soit moduler le signal optique modifié (20a, 20b, 20c, 20d) avant la conversion par la deuxième fréquence (f_{LO}(t)),
- soit mélanger le signal optique modifié (20a, 20b, 20c, 20d) avant la conversion avec un signal (25) modulé par la deuxième fréquence (f_{LO}(t)),
- soit mélanger au moins un signal électrique (10, 10a, 10b, 10c) résultant de la conversion avec le deuxième signal (7),
- un convertisseur N/A (13, 13a, 13b, 13c) pour numériser au moins un signal mélangé (12, 12a, 12b, 12c, 12d),
- des moyens d'exploitation (15) pour la détermination de la grandeur physique à mesurer avec une résolution spatiale à partir des données numérisées,
**caractérisé en ce que** le dispositif comporte de plus des moyens pour générer un troisième signal électrique (8) à une troisième fréquence, la troisième fréquence correspondant à la différence de fréquence (f_{ZF}) ou à un multiple de la différence de fréquence (f_{ZF}), et **en ce que** le convertisseur N/A (13, 13a, 13b, 13c) est en mesure d'échantillonner au moins un signal mélangé (12, 12a, 12b, 12c) à une troisième fréquence pour le numériser.

8. Dispositif selon la revendication 7, **caractérisé en ce que** les moyens pour la génération du premier signal électrique (6) sont un premier système DDS (1), et/ou que les moyens pour la génération du deuxième signal électrique (7) sont un deuxième système DDS (2) et/ou que les moyens pour la génération du troisième signal électrique (8) sont un troisième système DDS (3).

9. Dispositif selon la revendication 8, **caractérisé en ce que** le dispositif comporte de plus un générateur d'horloge (4) pouvant alimenter le premier système DDS (1), et/ou le deuxième système DDS (2) et/ou le troisième système DDS (3) avec un signal d'horloge (5).

10. Dispositif selon une des revendications 7 à 9, **caractérisé en ce que** l'objet à mesurer est une fibre optique (18) de préférence enfermée dans le dispositif, la grandeur physique à mesurer avec une résolution spatiale étant notamment la température locale de la fibre optique (18).
